# EUROPEAN PATENT SPECIFICATION

(11) **EP 2 669 105 B1**
(45) Date of publication and mention of the grant of the patent: **28.10.2020**
(21) Application number: 12738956.7
(22) Date of filing: 25.01.2012
(51) Int. Cl.: B60H 1/22, H01M 8/00, H01M 10/615, H01M 10/66

(54) **TEMPERATURE ADJUSTMENT SYSTEM**
TEMPERATUREINSTELLUNGSSYSTEM
SYSTÈME DE RÉGLAGE DE TEMPÉRATURE

(30) Priority: 26.01.2011 JP 2011014024
(43) Date of publication of application: 04.12.2013
(73) Proprietor: Mihama Corporation, Tokyo 105-8437 (JP)
(72) Inventor: MIHAMA, Takeshi, Tokyo 105-8437 (JP); YAMABE, Kenichiro, Tokyo 105-8437 (JP)
(74) Representative: Wibbelmann, Jobst
(86) International application number: PCT/JP2012/000453
(87) International publication number: WO 2012/102035

(56) References cited:
- WO-A1-90/15955
- WO-A1-98/01702
- DE-A1- 3 334 992
- JP-A- 6 143 987
- JP-A- 6 260 196
- JP-A- 61 011 518
- JP-A- H06 143 987
- JP-A- 2003 211 945
- JP-A- 2004 119 299
- JP-U- H0 160 917
- US-A1- 2003 230 671
- US-A1- 2007 272 290

## Description

### TECHNICAL FIELD

The present invention relates to a system for controlling a temperature of a portion of an automobile in which wheels are driven by a motor by using a secondary cell or a fuel cell as in electric vehicles, hybrid (gasoline engine + electricity) vehicles, fuel-cell vehicles and the like for example.

### BACKGROUND ART

Recently, an increase in carbon dioxide has been cited as one of environmental problems. Carbon dioxide is cited as one of factors causing global warming, and an attempt has been made to suppress its generation, for example, a gas amount exhausted from an automobile and the like.

Thus, expectation has been risen for development of electric vehicles, hybrid vehicles, fuel-cell vehicles and the like (hereinafter referred to as electric vehicles and the like) which do not emit carbon dioxide or in which generation of carbon dioxide can be suppressed better than prior-art vehicles (See Patent Literature 1).

These electric vehicles and the like are effective as a measure against the environmental problems as above, but problems have been cited relating to performances of the automobile itself on the other hand.

If an air temperature falls low in a cold region or the like, for example, the electric vehicles and the like cannot be started relatively smoothly. Moreover, performances of running also deteriorate.

Furthermore, seats and the like get cold in the cold region.

Thus, it is planed to realize smooth start or running by heating a secondary cell whose temperature has fallen and by providing favorable discharge temperature characteristics. Moreover, it is intended to heat cold seats and the like so that running and the like could be performed in a comfortable environment.

However, in the electric vehicles and the like, if electric power charged in the secondary cell is consumed by a heater and the like for that purpose, a travel distance of these electric vehicles and the like is reduced by that amount. Thus, in the case of a secondary cell, charging frequency becomes high, and the life of a battery itself becomes short. Fuel gets consumed earlier in the fuel cell, too.

### CITATION LIST

### PATENT LITERATURE

Patent Literature 1: Japanese Unexamined Patent Publication (Kokai) No. 10-147138
Patent Literature 2: JPH06143987 A discloses an apparatus according to the preamble of claim 1.

### SUMMARY OF THE INVENTION

### PROBLEMS TO BE SOLVED BY THE INVENTION

The present invention was made in view of the aforementioned problems and has an object to provide a system which can efficiently control a temperature of each portion of the automobile so that deterioration of performances as an automobile such as electric vehicles and the like can be prevented and comfortable running and the like can be performed even in a cold region and the like.

### MEANS FOR SOLVING THE PROBLEMS

In order to achieve the aforementioned objects, the present invention is a temperature control system incorporated in an automobile provided at least with a motor chamber on which a secondary cell or a fuel cell for driving wheels by a motor is mounted and a cabin into which a person gets on and controlling a temperature of a portion of the automobile, wherein the temperature control system includes at least one catalytic heater provided with a catalyst and a fuel tank for supplying fuel to the catalyst; the catalytic heater generates heat when an oxidizing gas and fuel from the fuel tank are supplied to the catalyst, and at least a part of the gas supplied to the catalyst and heated by the generated heat is subjected to circulative supply to the catalyst; and the temperature of the portion of the automobile is controlled by using heat generated by the catalytic heater.

As described above, the temperature control system of the present invention is configured so that, first, in the catalytic heater, the oxidizing gas is supplied to the catalyst together with the fuel, and at least a part of the gas heated by the generated heat is subjected to circulative supply to the catalyst. Since such a mechanism is provided, unreacted oxidizing gas or fuel in the gas after reaction on the catalyst can be circulated and repeatedly supplied to the catalyst and can be reacted newly therein. Therefore, as compared with the reaction between the supplied oxidizing gas and the fuel by being passed on the catalyst only once, exhaust to the outside of the automobile in an unreacted state and the like can be prevented, whereby reaction with extreme efficiency can be realized, and at the same time, the temperature of the gas to be circulated can be further raised, and more heat can be generated. As a result, a cost can be reduced and moreover, functions as a heat source for the temperature control system can be fully exerted.

Moreover, since the system is configured such that the heat can be generated efficiently through circulation, a size increase of the catalytic heater itself with a large-sized mechanism in order to obtain a required heat amount can be prevented, and the system can be made compact. Thus, it is possible to make the catalytic heater a portable configuration, and works such as recovery/replacement of the catalytic heater in the case of deterioration of the catalyst or the like and recycling of the catalyst and the like can be performed easily.

Moreover, since a ratio in a space occupied by the catalytic heater inside the automobile can be made smaller by the compact size, design freedom of the automobile can be improved.

Since the temperature of a portion of an automobile is controlled by using heat generated by this catalytic heater, necessity to consume electric power of the secondary cell or the like for the heater and the like can be suppressed exceedingly. Electric power can be used for driving of the wheels more than before for that suppressed power consumption, and a travel distance can be prolonged.

Moreover, since more electric power can be used for driving of the wheels, a frequency of charging the secondary cell can be reduced as compared with the frequency before, whereby the life of the battery itself can be extended, and in the fuel cell, too, consumption of fuel for those other than driving of the wheels can be suppressed.

As described above, without consuming the power of a secondary cell or the like, heat can be generated by a catalytic heater efficiently and the heat can be used for controlling the temperature of a portion of an automobile easily. As a result, even if an outside air temperature is low as in a cold region, deterioration of performances as an automobile can be prevented by heating the secondary cell by this system, for example, and an environment in a cabin including seats and the like can be improved.

At this time, it is possible that the temperature control system further comprises a supply fan for supplying the oxidizing gas to the catalyst, and the supply fan is rotatable by using a ram pressure during running.

With such configuration, power consumption of a secondary cell and the like required for rotation of the supply fan for supplying the oxidizing gas during running can be suppressed as much as possible. Thus, prolongation of a travel distance and extension of the life of a battery can be realized.

Moreover, it is possible that the temperature control system further comprises a thermoelectric element, and the thermoelectric element generates power by using a temperature difference in the temperature control system.

With such configuration, the power generated by the thermoelectric element can be accumulated in other secondary cells and can be used as a power supply for various types of equipment, whereby power consumption of the secondary cell and the like can be suppressed for that accumulated power, and prolongation of a travel distance and extension of the life of a battery can be realized.

Moreover, it is possible that the fuel is methanol.

Methanol is widely used as a fuel for a catalytic heater and is easily available.

Moreover, it is possible that the catalytic heater is further provided with a filter, and the fuel is subjected to infiltration and evaporation through the filter and supplied to the catalyst.

By providing such filter, the fuel can be efficiently evaporated and supplied to the catalyst. Moreover, the fuel can be uniformly supplied to the catalyst easily.

At this time, it is possible that a fuel supply pipe is connected to the fuel tank, and the fuel dropped by gravity from the fuel supply pipe is supplied to the catalyst through the filter.

As described above, if the fuel is dropped by gravity from the fuel supply pipe and is supplied to the filter or the like, an electric motor or the like is not needed for supply of the fuel to the filter or the like, and power of the secondary cell or the like is not consumed, which is preferable.

Moreover, it is possible that the catalyst is platinum and/or palladium.

As a catalyst of the catalytic heater, platinum and palladium are widely used. They can be used separately or used at the same time in accordance with a catalysis temperature in a catalytic reaction and the like.

Moreover, it is possible that the catalytic heater is provided with a plurality of the same or different types of catalysts as the catalyst; the plurality of catalysts are arranged in series so that the oxidizing gas and the fuel can be sequentially supplied to the plurality of catalysts; or the plurality of catalysts are arranged in parallel and the oxidizing gas and the fuel can be selectively and separately supplied to the plurality of catalysts.

If the same type of the catalysts are arranged in series, since reaction between the oxidizing gas and the fuel can be repeated on the catalyst, emission without being fully reacted or the like can be prevented, and heat can be generated efficiently.

If the same type of the catalysts are arranged in parallel, if one of the catalysts is deteriorated, switching can be made so that the oxidizing gas and the fuel are supplied to the other catalyst.

In the case of the different types of the catalysts, by arranging the catalysts with different catalysis temperatures in series, for example, heat can be generated efficiently. That is, after the temperature has risen by a reaction on one of the catalysts, passage on the other catalyst with higher working temperature can promote reaction and generate heat.

Even if they are arranged in parallel, by means of selective supply onto the other catalyst with the higher working temperature in accordance with the temperature of the gas after reaction on the one catalyst and the like in circulation of the gas, heat can be generated efficiently. By selectively using the catalysts as appropriate in accordance with the gas temperature and the like, deterioration of the catalysts can be suppressed.

It is possible that the temperature control system further comprises a liquid medium, and the liquid medium is heated by using heat generated by the catalytic heater and is circulated to the portion of the automobile.

As described above, the temperature of a portion of the automobile can be easily controlled only by the catalytic heater and the liquid medium.

At this time, it is preferable that the temperature control system further comprises a heat exchanger for transmitting heat generated by the catalytic heater to the liquid medium.

By providing a heat exchanger, the temperature of a portion of the automobile can be controlled by efficiently transmitting the heat from the catalytic heater to the liquid medium.

Moreover, it is possible that a gas which is supplied to the catalyst, is heated by the generated heat and is not subjected to circulative supply to the catalyst is circulated to the portion of the automobile.

As described above, the gas heated by the heat from the catalytic heater and going out of the circulation to the catalyst can be used for temperature control of a portion of the automobile. By combining it with the temperature control by the aforementioned liquid medium, the heat amount in the gas which cannot be fully recovered by the liquid medium can be used for the temperature control without waste.

Moreover, it is possible that the temperature control system is provided with a function of cooling the inside of the cabin, and the air inside the cabin is cooled by a heat pump method by using heat generated by the catalytic heater.

As described above, since the air in the cabin can be also cooled by the heat pump method, the environment in the cabin can be kept comfortable even in a region with a high temperature. Moreover, since that is realized by the heat from the catalytic heater, power of the secondary cell or the like is not consumed for cooling.

Moreover, it is possible that the temperature control system is provided with a function of heating the inside of the cabin, and the air inside the cabin is heated by using heat generated by the catalytic heater.

With such configuration, the inside of the cabin can be also heated, and the environment in the cabin can be kept comfortable even in a cold region or the like. Moreover, since that is realized by the heat from the catalytic heater, power of the secondary cell or the like is not consumed for heating.

### EFFECT OF THE INVENTION

With the temperature control system of the present invention, in an electric vehicle and the like, the temperature of a portion of an automobile and the like can be controlled easily and efficiently even in a cold region or the like, whereby deterioration of the performances of the automobile and the like can be prevented so that the automobile can run in the comfortable environment. Moreover, consumption of power of the secondary cell or the like can be kept low exceedingly in heating a portion of the automobile, and a travel distance of an automobile can be prolonged, and the life of the battery can be extended.

In addition, the catalytic heater can be made compact, and moreover, the design of an automobile can be influenced, and a work in maintenance can be facilitated.

### BRIEF DESCRIPTION OF THE DRAWINGS

[Fig. 1] Fig. 1 is an outline diagram illustrating an example of a temperature control system of the present invention.
[Fig. 2] Fig. 2 is an explanatory diagram illustrating an example of a mechanism for heating a liquid medium by using heat generated from a catalytic heater.
[Fig. 3] Fig. 3(A) is an explanatory diagram illustrating an example when a plurality of catalysts are arranged in series in the catalytic heater, and Fig. 3(B) is an explanatory diagram illustrating an example when the plurality of catalysts are arranged in parallel in the catalytic heater.
[Fig. 4] Fig. 4 is an explanatory diagram illustrating an example of arrangement of receiver.
[Fig. 5] Fig. 5 is an explanatory diagram illustrating an example of a mechanism of rotation of a supply fan using a ram pressure.
[Fig. 6] Fig. 6 is an explanatory diagram illustrating another example of a mechanism for heating the liquid medium by using heat generated from the catalytic heater.
[Fig. 7] Fig. 7 is an explanatory diagram illustrating an example of a mechanism for heating a secondary cell.
[Fig. 8] Fig. 8 is an explanatory diagram illustrating an example of a mechanism for heating a seat.
[Fig. 9] Fig. 9 is an explanatory diagram illustrating an example of the temperature control system further provided with a thermoelectric element.
[Fig. 10] Fig. 10 is an explanatory diagram illustrating an example of a mechanism for carrying out air conditioning by using heat generated from the catalytic heater.
[Fig. 11] Fig. 11 is an explanatory diagram illustrating an example of a mechanism for heating by using heat generated from the catalytic heater.
[Fig. 12] Fig. 12 is an explanatory diagram illustrating an example of a mechanism for cooling by using heat generated from the catalytic heater.
[Fig. 13] Fig. 13 is a graph illustrating a measurement result of a temperature in the vicinity of the catalyzer and in a downstream region thereof in Example 2.

### BEST MODE FOR CARRYING OUT THE INVENTION

An embodiment of the present invention will be described below by referring to the attached drawings, but the present invention is not limited to that.

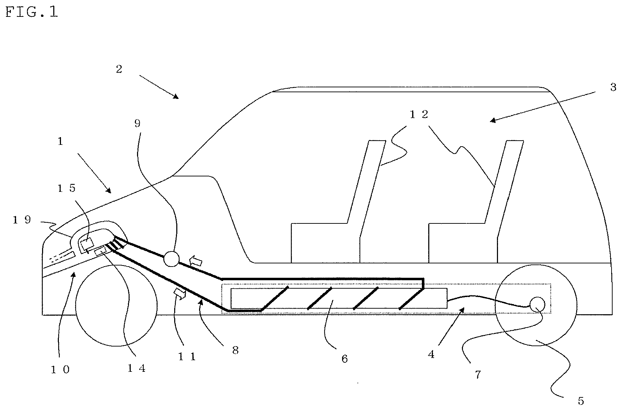

Fig. 1 illustrates an outline of an example of a temperature control system 1 of the present invention. In Fig. 1, an automobile 2 incorporating the temperature control system 1 of the present invention is also illustrated.

Moreover, an electric vehicle on which a secondary cell is mounted is explained here as an example of an automobile 2, but it can be a hybrid vehicle (particularly those with a higher ratio of electric driving) and a fuel-cell automobile on which a fuel cell (and a secondary cell) is mounted in addition to that.

The automobile 2 is provided with a motor chamber 4 and a wheel 5 in addition to a cabin 3 into which a person gets on, and a secondary cell 6 and a motor 7 are mounted in the motor chamber 4. The wheel 5 can be driven by rotating the motor 7 by a secondary cell 6.

In Fig. 1, the motor chamber 4 is provided on a lower part of the automobile 2, but this is not limiting, and the motor chamber 4 can be provided at an appropriate position in accordance with other conditions.

As a configuration of such temperature control system 1 of the present invention incorporated in the automobile 2, a liquid sending pipe 8, a pump 9, a catalytic heater 10, and a liquid medium 11 are included.

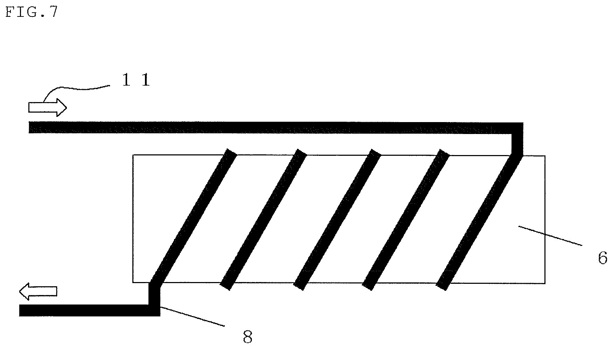

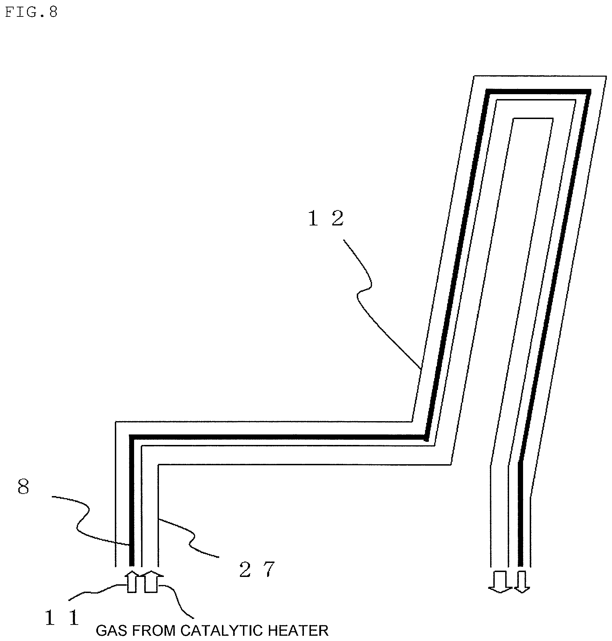

The liquid sending pipe 8 has an annular shape and is disposed via portions of the automobile to be temperature-controlled (the secondary cell 6, a seat 12 (See Figs. 7 and 8) and the like). The liquid medium 11 is contained in the liquid sending pipe 8 and the liquid medium 11 is made capable of circulating through portions of the automobile to be temperature-controlled by the pump 9 through the liquid sending pipe 8.

Moreover, the catalytic heater 10 is disposed, and it is configured such that the liquid medium 11 in the liquid sending pipe 8 is heated by using heat generated by the catalytic heater 10. By heating the liquid medium 11 flowing through the liquid sending pipe 8, with capablity of circulation as above, the heated liquid medium 11 circulates through portions of the automobile such as the secondary cell 6, the seat 12 and the like, and their temperatures can be controlled. The number of catalytic heaters 10 is not particularly limited but may be used in plural in accordance with the needs.

Each portion of the temperature control system 1 of the present invention will be described below in further detail.

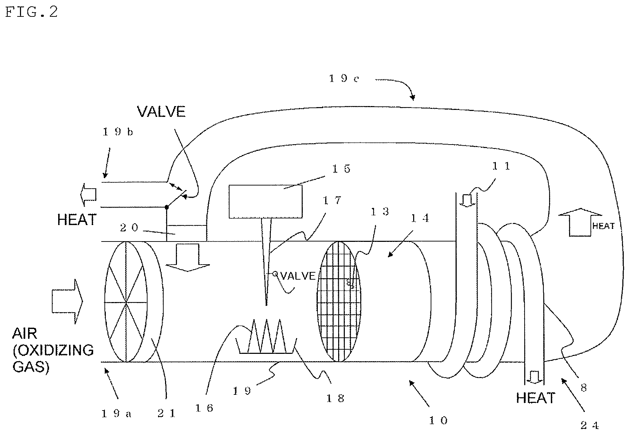

Fig. 2 illustrates an example of a mechanism for heating the liquid medium by using heat generated from the catalytic heater.

First, the catalytic heater 10 will be further described.

The catalytic heater 10 has a carrier (catalyzer 14) by which a catalyst 13 is supported, a fuel tank 15, and a filter 16 for infiltration and evaporation of a fuel. To the fuel tank 15, a fuel supply pipe 17 is connected, and a valve for adjusting a drop amount of the fuel is provided in the fuel supply pipe 17. Moreover, the filter 16 is placed and supported by a receiver 18.

Moreover, a duct 19 is provided, and the filter 16, the receiver 18, and the catalyzer 14 are arranged therein. This duct 19 has a supply port 19a for supplying an oxidizing gas to the inside and a discharge port 19b capable of discharging a part of a gas after reaction of the fuel and the oxidizing gas on the catalyst, and also has an annular portion 19c. Particularly since the annular portion 19c is provided, the gas after reaction on the catalyst can be circulated and can be supplied again to the catalyzer 14. A ratio of a flow rate to be circulated to a flow rate to be discharged can be controlled by providing a valve or the like in the vicinity of the discharge port 19b.

The duct 19 communicates with the outside of the automobile, for example, via the supply port 19a and the discharge port 19b, and the oxidizing gas such as air and the like to be supplied to the catalyzer 14 can be taken in from the outside of the automobile, for example, via the supply port 19a. Moreover, the fuel and the oxidizing gas not used in reaction on the catalyst 13 or a part of the gas after reaction and the like can be discharged to the outside of the automobile via the discharge port 19b.

As the catalyst 13, platinum or palladium can be cited, for example, but it is not limiting and can also include rhodium, iridium, nickel, iron, ruthenium, molybdenum, tungsten, tin, a compound of niobium or titanium oxides with carbon or nitrogen, and a mixture thereof. Moreover, catalysts generally used in a catalyst heater can be used, and they are not particularly limiting.

Furthermore, the shape is not particularly limited, either, but fine particles with the size of 1 to 100 nm, for example, are preferably used in order to enlarge the surface area and to improve reaction efficiency.

As a carrier, ceramics such as alumina, silica, zeolite and the like, metals such as aluminum, stainless and the like, glass fibers, polyimide, PTFE, silicon carbide, carbon and the like can be cited, for example, but they are not particularly limiting. In addition, carriers generally used in a catalytic heater can be used.

Moreover, the shape is not particularly limited, either, but those having a honeycomb shape can be used in view of efficiency, for example.

The catalyst 13 and the carrier can be determined as appropriate in accordance with the fuel to be used and the like. By selecting the catalyst 13 and the carrier in accordance with the conditions and by uniformly coating the carrier with the catalyst 13, for example, the appropriate catalyzer 14 can be prepared.

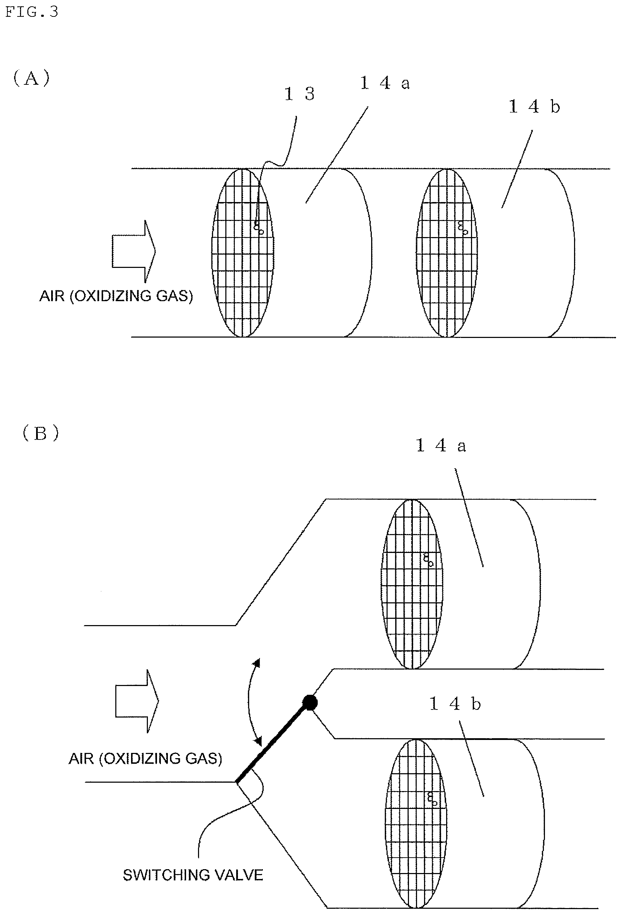

Moreover, a plurality of the catalyzers 14 can be also arranged. Fig. 3(A) illustrates arrangement of the plurality of catalysts in series, while Fig. 3(B) illustrates arrangement in parallel.

First, in the arrangement in series as illustrated in Fig. 3(A), if the catalyzers 14a and 14b are of the same type, in addition to the effect of circulation, reaction of the oxidizing gas and the fuel on the catalyst can be conducted repeatedly in one session of circulation and thus, the ratio of the unreacted oxidizing gas and the unreacted fuel can be further decreased. Therefore, the oxidizing gas and the fuel can be reacted more efficiently so as to generate heat.

Moreover, if the catalyzers 14a and 14b are of different types, by arranging a catalyst with different catalysis temperature, for example, heat can be generated more efficiently. At this time, it is preferable that the catalyzer 14a with a low working temperature is arranged on the upstream side and the catalyzer 14b with a high catalysis temperature on the downstream side. With such arrangement, the gas after reaction on the catalyzer 14a is heated by the heat and its temperature rises. Subsequently, it can be supplied to the catalyzer 14b with a high catalysis temperature and thus, efficient reaction is made possible.

On the other hand, in the arrangement in parallel as illustrated in Fig. 3(B), if the catalyzers 14a and 14b are of the same type, one of them can be arranged as a spare. That is, first, the oxidizing gas and the fuel are supplied only to the one catalyzer 14a side and in the case of deterioration of the catalyzer 14a, switching can be made by a valve or the like so that they can be supplied to the catalyzer 14b.

Moreover, if the catalyzers 14a and 14b are of different types, by arranging the catalyst with a different catalysis temperature, for example, and by switching to the catalyst side having an appropriate catalysis temperature by means of a valve or the like in accordance with the temperature of the supplied gas, reaction can be conducted more efficiently so as to generate heat. By selecting an appropriate catalyst corresponding to the temperature of the gas, deterioration of the catalyst can be prevented, and the life thereof can be extended.

Moreover, the fuel tank 15 may be of any type as long as the fuel to be used can be stored appropriately. The size, shape and the like can be determined as appropriate in accordance with a space inside the automobile 2.

The shape, number and the like of the fuel supply pipe 17 connected to the fuel tank 15 is not particularly limited. It can be of any type as long as the fuel can be dropped to the filter 16 or the receiver 18 as appropriate.

By providing such fuel supply pipe 17 and by dropping the fuel by gravity while a drop amount is controlled by using a valve or the like, a need to use an electric motor or the like in fuel supply can be eliminated, and power of the secondary cell or the like is not used, which is preferable.

Subsequently, as the filter 16, a filter formed by wrapping cotton or the like around mesh SUS or the like machined to have a pleat shape can be used, for example, but in view of the temperature of the gas or the like, a material with more excellent heat resistance can be used. SUS itself can be used or SUS can be machined so that the fuel is sucked up by capillary action and the like and infiltrates on the surface. Alternatively, surface treatment by a silane coupling agent or the like may be applied.

Any filter into which the dropped fuel can infiltrate easily and in which the fuel evaporates easily by ventilation as above is preferable, and the material, shape, number and the like thereof are not particularly limited.

Moreover, the receiver 18 can be of any type as long as the filter 16 can be appropriately placed and supported thereby and the dropped fuel can be stored, and the material, shape, number and the like thereof are not particularly limited. SUS, for example, can be used.

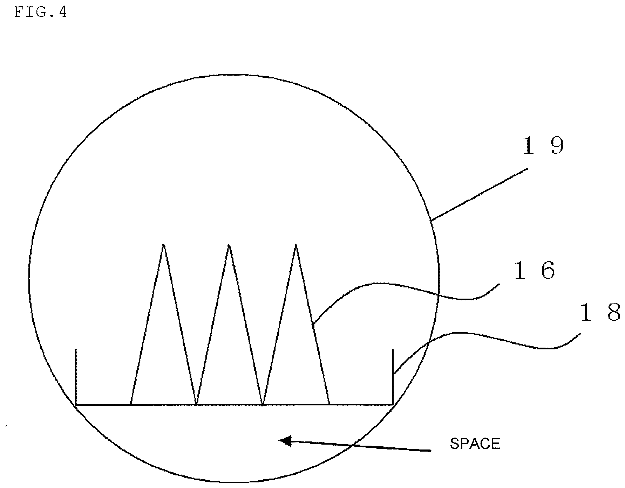

Arrangement of the receiver 18 is not particularly limited, either, but it is preferably arranged in the duct 19 so that a space is formed below the receiver 18, for example. If the duct 19 is a circular pipe and the bottom of the receiver 18 is flat, such space can be provided easily. Fig. 4 illustrates an example of arrangement of the receiver 18 by providing a space below that.

With the arrangement as in Fig. 4, the heated and circulated gas can pass not only above but also below the receiver 18, whereby the fuel in the receiver 18 can be heated also from below the receiver 18 and the fuel can be evaporated more easily and efficiently.

It is needless to say that the supply method and evaporation method of the fuel are not limited to them. Any method can be employed as long as the fuel can be supplied from the fuel tank to the catalyst and be reacted.

The fuel can include hydrogen, alcohols such as methanol, ethanol and the like, hydrocarbons such as propane, butane and the like, for example, but they are not limiting and an appropriate fuel can be prepared each time. Methanol in particular is preferable since it is widely used as a fuel for a catalytic heater.

If water or the like is generated in reaction between the oxidizing gas and the fuel on the catalyst 13, a trap 20 is preferably provided in the duct 19 for catching it. As described above, removal of those unnecessary for reaction on the catalyst 13 improves efficiency.

In order to introduce the oxidizing gas into the duct 19 efficiently, a supply fan 21 can be further provided as the temperature control system 1. This supply fan 21 is provided in the duct 19. It can be of any type as long as the oxidizing gas can be supplied into the duct 19 through a dust-proof filter or the like from the outside of the automobile, and the type, number and the like thereof are not particularly limited.

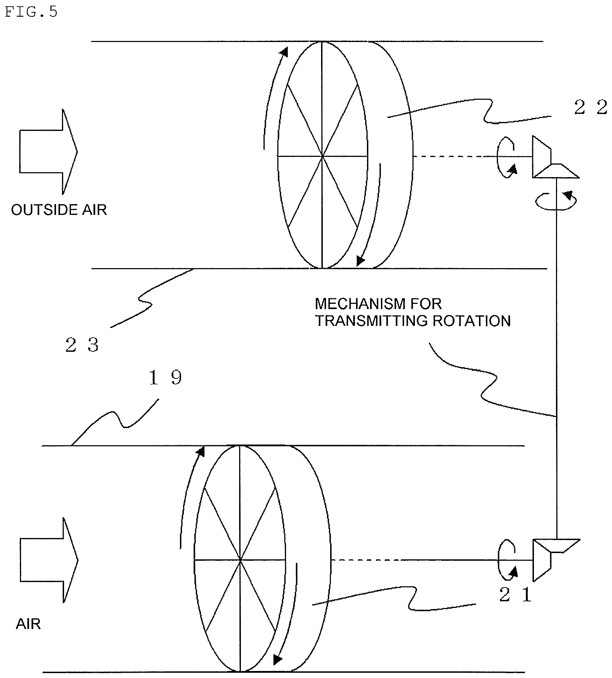

Particularly, a ram pressure during running can be used so as to make the supply fan rotatable. Fig. 5 illustrates an example of a mechanism of rotation of the supply fan using the ram pressure.

The mechanism of rotation illustrated in Fig. 5 has an outside air fan 22 and an outside air duct 23 in which the outside air fan 22 is disposed therein in addition to the supply fan 21. The outside air duct 23 communicates with the outside of the automobile, and the outside air can pass therethrough. Moreover, the outside air fan 22 has a mechanism for transmitting rotation of itself to the supply fan 21 by using a bevel gear and the like.

That is, the outside air enters into the outside air duct 23 during running and passes through the outside air duct 23, the outside air fan 22 inside is rotated by the ram pressure and this rotation of the outside air fan 22 is transmitted by the transmission mechanism so that the supply fan 21 is rotated.

A mechanism of the outside air fan 22 for transmitting the rotation to the supply fan 21 is not particularly limited and can be of any type as long as rotation can be transmitted to the supply fan 21.

For example, in Fig. 5, a bevel gear is simply used for transmitting the rotation of the outside air fan 22 to the supply fan 21. Moreover, the supply fan 21 and the outside air fan 22 are both a water-wheel type fans and can share the shaft centers so as to become coaxial. That is, this is a mechanism by which the coaxial supply fan 21 can rotate by means of rotation of the outside air fan 22 by the ram pressure.

Alternatively, a storage cell is separately disposed and the outside air fan 22 is connected to the storage cell, and it can be configured such that the storage cell is charged by rotation of the outside air fan 22 by the ram pressure, and the supply fan 21 is rotated by using it.

It is needless to say that they are not limiting and an appropriate rotating mechanism can be prepared each time.

Subsequently, the liquid medium 11 will be described.

The liquid medium 11 can include silicone oil, fluoride oil, ethylene glycol and the like, for example, but they are not limiting. The liquid medium can be of any type as long as it is not solidified easily and can receive heat generated by the catalytic heater 10 and transmit it to portions of the automobile efficiently.

Moreover, the pump 9 is not particularly limited, either, and any generally used prior-art type pump can be used, for example. It is only necessary that the pump can send the liquid medium 11 to portions of the automobile appropriately, and the arrangement position, number and the like are not limited, either and can be determined each time.

Subsequently, the liquid sending pipe 8 will be described.

It is only necessary that the liquid sending pipe 8 is disposed in portions of the automobile requiring temperature control, and the shape, number and the like threof are not particularly limited. Where to dispose the liquid sending pipe 8 can be determined as appropriate.

Here, by using the temperature control system 1 as above, a mechanism (heat exchanger 24) for heating the liquid medium by using heat generated from the catalytic heater 10 will be described. It is only necessary that heat can be transmitted efficiently from the catalytic heater 10 to the liquid medium 11 and the mechanism is not particularly limited. A general heat exchanger, for example, can be used.

In an embodiment illustrated in Fig. 2, the liquid sending pipe 8 is provided so as to be wound around the vicinity of the downstream of the catalyzer 14 in the annular portion 19c of the duct 19. On the contrary, the duct 19 can be wound around the liquid sending pipe 8.

Then, the air passing through the duct 19 when portions of the automobile are heated is supplied onto the catalyst 13 in the catalyzer 14 and reacts with the fuel supplied from the fuel tank 15. As a result, heat is generated. Then, the liquid medium 11 is heated by the heat generated from the catalytic heater 10 and the heat from the air in the duct 19 heated by the generated heat through the wound liquid sending pipe 8.

Since the liquid medium 11 heated as above is sent to portions of the automobile, portions of the automobile can be heated, and the temperature can be controlled.

At this time, it is difficult for the air and the fuel to be fully reacted through only one passage over the catalyst 13, and actually, a part thereof is still in an unreacted state. Moreover, only with one passage, the gas temperature after reaction may not reach a temperature high enough for heat exchange.

Thus, in the catalytic heater 10 in the temperature control system 1 of the present invention, since the duct 19 has the annular portion 19c as described above, at least a part of the air heated by the generated heat can be subjected to circulative supply to the catalyst 13. Thus, unreacted air or fuel in the gas after reaction on the catalyst 13 can be circulated and repeatedly supplied to the catalyst 13 and can be newly reacted therein.

Therefore, the supplied air and fuel can be reacted extremely efficiently as compared with reaction with only one passage on the catalyst 13, and more heat can be generated. Moreover, since the gas heated once is reacted again, the temperature of the reacted gas can be further raised. That is, more heat energy can be obtained efficiently, a difference between the gas temperature and the temperature of the liquid medium and the like can be kept larger, heat can be exchanged efficiently, and temperature control of portions of the automobile can be executed in a wider temperature range. Moreover, fuel and the like can be fully utilized, and a cost can be also reduced.

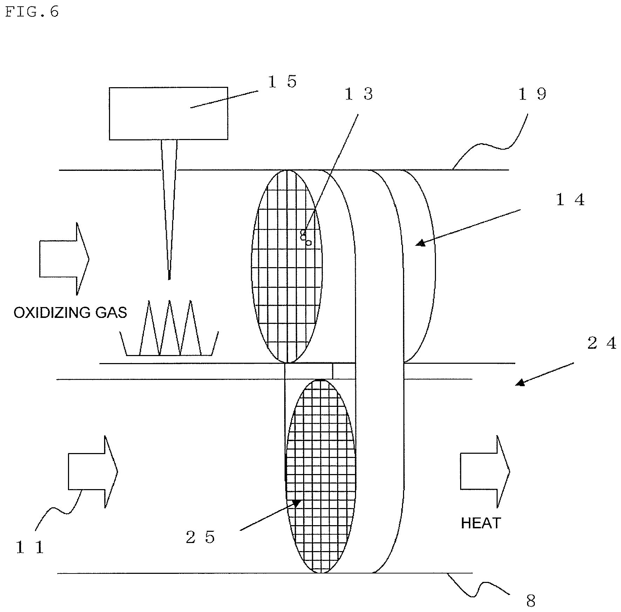

Moreover, Fig. 6 illustrates another example of the heat exchanger. As illustrated in Fig. 6, in this mode of the heat exchanger 24, the catalytic heater 10 further has a thermal conductor 25. The thermal conductor 25 is connected to the catalyzer 14 having the catalyst 13 and is inserted into the liquid sending pipe 8. The material, shape and the like of this thermal conductor 25 are not particularly limited, and it is only necessary that the heat generated on the catalyst 13 can be transmitted to the liquid medium 11 in the liquid sending pipe 8 efficiently.

When portions of the automobile are to be heated, the fuel is supplied from the fuel tank 15 and the air and the like are supplied from the duct 19 to the catalyzer 14 and they are reacted with each other so as to generate heat. This generated heat is transmitted to the thermal conductor 25, and the liquid medium 11 in the liquid sending pipe 8 is heated through this thermal conductor 25, whereby portions of the automobile are heated.

At this time, since the unreacted air or fuel heated similarly can be circulated, the temperature of the thermal conductor can be raised to a high temperature efficiently.

Portions of the automobile for temperature control are not particularly limited, and the portions can be determined in accordance with necessity. For example, the secondary cell 6, the seat 12 and the like can be cited.

Fig. 7 illustrates an example of a mechanism for heating the secondary cell. Moreover, Fig. 8 illustrates an example of a mechanism for heating the seat. In each case, the liquid sending pipe 8 containing the liquid medium 11 is disposed, and the secondary cell 6 and the seat 12 can be heated by the heated liquid medium 11.

Another example of the temperature control system of the present invention will be described below.

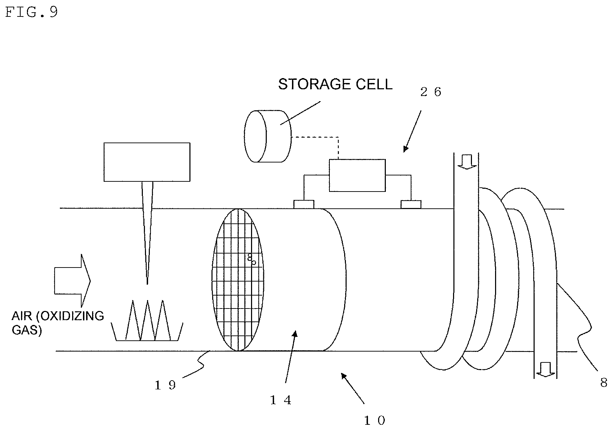

As illustrated in Fig. 9, a thermoelectric element, for example, can be further provided. This thermoelectric element 26 itself is not particularly limited but prior-art ones and the like can be used.

The thermoelectric element 26 can be connected to the vicinity of the catalyzer 14 and a position on the downstream thereof (that is, a spot where the heated gas flows) of the annular portion 19c in the duct 19 of the catalytic heater 10 in the temperature control system, for example. If methanol is used as the fuel and the catalyst of platinum, palladium or the like is used as an example, a temperature difference between the two points can be set to approximately 200°C (the temperature in the vicinity of the catalyzer is approximately 200°C and the position on the downstream (gas temperature) is 400°C or more). As described above, since the present invention can generate a large temperature difference, power can be generated by the thermoelectric element 26.

As described above, power generated by the thermoelectric element 26 can be stored in a separate storage cell or the like. And it can be used for rotational driving of the supply fan 21 before startup of the automobile or the like, for example. Since the supply fan 21 can be rotated by a mechanism using the aforementioned ram pressure or the like during running, the catalytic heater 10 can be operated without using any power of the secondary cell 6. Moreover, it can be used as a power supply for various types of equipment.

Moreover, in the example illustrated in Fig. 2, the gas not circulated onto the catalyst 13 in the catalytic heater 10 is discharged to the outside of the automobile, but the discharge port 19b side can be connected to a temperature-control duct 27 disposed to portions of the automobile (See Fig. 8). As such, a heat amount remaining in the gas after transmission of the heat by the heat exchanger 24 to the liquid medium 11 can be transmitted to portions of the automobile through the temperature-control duct 27. Even waste heat can be used, and the heat generated by the catalytic heater 10 can be used without waste, which is efficient.

Fig. 8 illustrates an example of a state in which the temperature-control duct 27 is disposed in addition to the liquid sending pipe 8 in the seat 12.

Moreover, an air-conditioning duct communicating with the inside of the cabin 3 can be further provided so that the inside of the cabin 3 is heated/cooled by using heat generated by the catalytic heater 10.

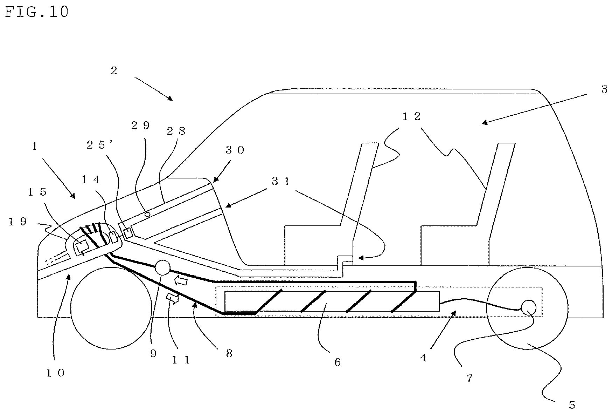

Fig. 10 illustrates an example of a mechanism for air-conditioning by using heat generated from the catalytic heater.

The air-conditioning duct 28 and an air-conditioning fan 29 are disposed in the automobile 2. In the cabin 3, an air inlet 30 for sucking air in the cabin 3 and an air outlet 31 for sending air into the cabin 3 are formed, and the air inlet 30 and the air outlet 31 communicate with the air-conditioning duct 28.

Moreover, the air-conditioning fan 29 is disposed in the air-conditioning duct 28, and by rotating this air-conditioning fan 29, air in the cabin 3 can be sucked through the air inlet 30, and the air can be sent into the cabin 3 through the air outlet 31 via the air-conditioning duct 28.

By means of such mechanism, the air in the cabin 3 can be circulated.

Moreover, it is configured such that the air in the air-conditioning duct 28 is conditioned by using heat generated by the catalytic heater 10. Since the air flowing through the air-conditioning duct 28 is conditioned capable of being circulated as above, the air in the cabin 3 can be conditioned.

First, a mechanism of heating in the cabin 3 by using the catalytic heater 10 will be described by using an example. It is needless to say that the present invention is not limited to this mechanism but another mechanism of heating the inside of the cabin 3 by using the catalytic heater 10 can be employed.

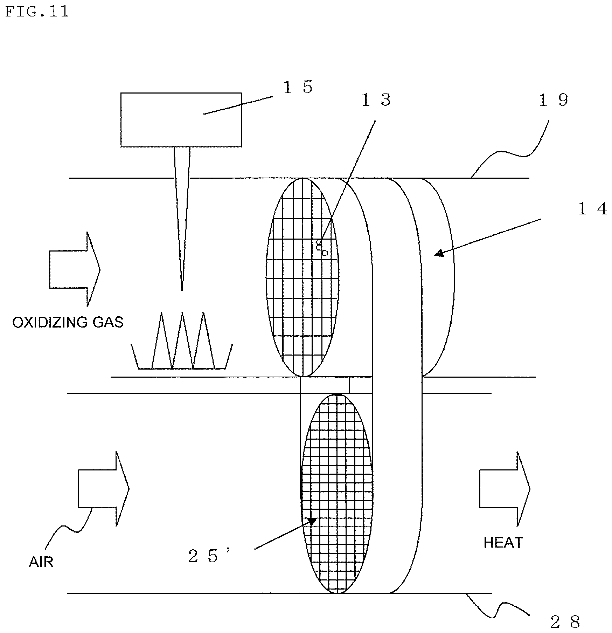

Fig. 11 illustrates an example of a mechanism of heating in the cabin by using the catalytic heater.

As illustrated in Fig. 11, in this example, the catalytic heater 10 further has a thermal conductor 25' and is inserted into the air-conditioning duct 28. The material, shape and the like of the thermal conductor 25' are not particularly limited but those capable of efficient transmitting the heat generated on the catalyst 13 to the air in the air-conditioning duct 28 may be used.

In heating, the fuel is supplied from the fuel tank 15 and the air and the like is supplied from the duct 19 to the catalyzer 14 and reacted so as to generate heat. This generated heat is transmitted to the thermal conductor 25', and the air in the air-conditioning duct 28 is heated through this thermal conductor 25', whereby the inside of the cabin 3 can be heated.

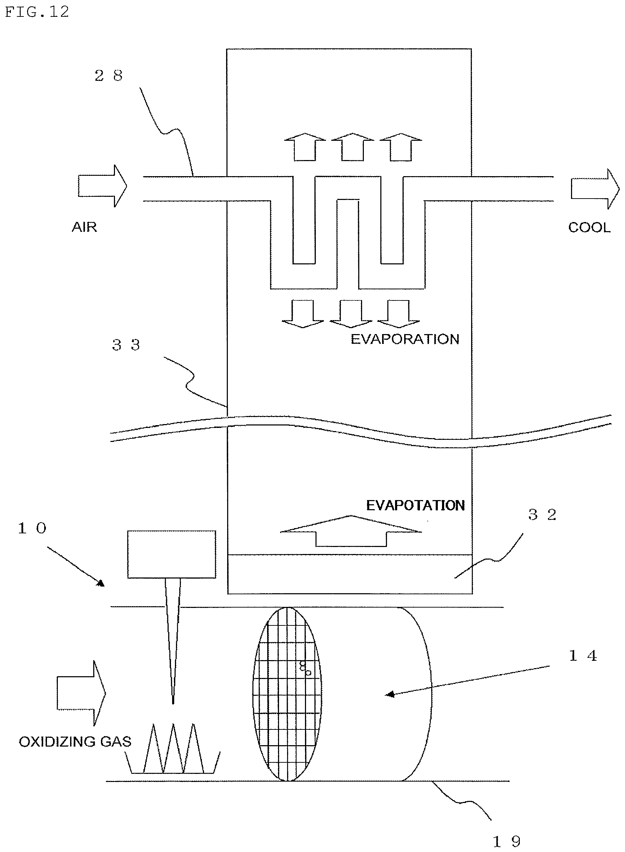

Subsequently, Fig. 12 illustrates an example of a mechanism of cooling in the cabin by using the catalytic heater.

As illustrated in Fig. 12, a refrigerant chamber 33 containing a refrigerant 32 is further disposed in the automobile 2, and the air-conditioning duct 28 is inserted into the refrigerant chamber 33. Moreover, the catalytic heater 10 is arranged in the vicinity of the refrigerant chamber 33.

As the refrigerant 32, fluorine refrigerants HFO-1234yf or HFO-1234zf and their isomers, fluorine refrigerants such as R-134a, carbon dioxide, ammonia, hydrocarbon and the like with a low global heating coefficient can be cited. In addition, generally used refrigerants can be used.

The size and the shape of the refrigerant chamber 33 and arrangement of the air-conditioning duct 28 into which the refrigerant chamber 33 is inserted and the like are not particularly limited but can be determined as appropriate so that the air in the air-conditioning duct 28 is cooled by a heat pump method as will be described later.

Moreover, the arrangement of the catalytic heater 10 is not particularly limited, either, but the catalytic heater 10 can be arranged in the vicinity of a bottom of the refrigerant chamber 33 where the refrigerant 32 collects, for example. At such position, the refrigerant 32 can be heated by the catalytic heater 10 and evaporated efficiently.

In cooling, the fuel and the oxidizing gas are supplied to the catalyzer 14 of the catalytic heater 10, and heat is generated by reaction. By means of this heat, the refrigerant 32 in the refrigerant chamber 33 is evaporated. The evaporated refrigerant 32 is cooled after that and is condensed in the vicinity of the air-conditioning duct 28 arranged in an upper part of the refrigerant chamber 33, for example, but deprives the air in the air-conditioning duct 28 of heat and evaporates it again. By means of such heat pump method, the air in the air-conditioning duct 28 can be cooled and the inside of the cabin 3 can be cooled.

It is needless to say that this example is not limiting, and another cooling mechanism using the catalytic heater 10 can be employed.

Regarding the catalytic heater 10 used for air conditioning of heating and cooling, a plurality of catalytic heaters 10 as a whole can be disposed separately and independently for heating or for cooling.

On the contrary, one (or a plurality of) catalytic heater can be prepared and disposed so as to serve both for heating and for cooling. The example illustrated in Figs. 11 and 12 can be combined, for example, so that one catalytic heater 10 is used for heating the air in the air-conditioning duct 28 through the thermal conductor 25' while the refrigerant 32 is heated by the catalytic heater 10 so as to be used for cooling the air in the air-conditioning duct 28 by the heat pump method. In this case, heating and cooling can be determined by branching the air-conditioning duct 28 and by switching to a duct for flowing.

Moreover, the catalytic heater 10 for heating the liquid medium 11 can be also used for air-conditioning or can be provided separately and independently.

By further providing such air-conditioning mechanism, the air in the cabin 3 can be also conditioned (for heating and cooling) by using heat generated by the catalytic heater 10.

Since the catalytic heater 10 is used, consumption of power of the secondary cell 6 for air-conditioning as in a PTC heater of a prior-art electric vehicle or the like can be prevented, and a travel distance can be extremely made longer than before. Therefore, a charging frequency of the secondary cell can be reduced, and the life of the battery itself can be also extended.

In the case of a fuel cell vehicle, since power spent for air conditioning can be made unnecessary, a decrease in a fuel for a fuel cell for functions other than driving of a wheel can be prevented, and a travel distance can be prolonged.

Moreover, in a heat-pump type air-conditioning system in which heat is pumped up from the outside air, efficiency of heating in a cold region, for example, is extremely low. However, with the temperature control system 1 of the present invention using the catalytic heater 10 provided with the aforementioned air-conditioning mechanism, air conditioning such as heating of the inside of the cabin 3 can be performed efficiently and stably without being affected by an outside air temperature.

As described above, with the temperature control system 1 of the present invention, particularly since the catalytic heater 10 has a mechanism capable of circulating the oxidizing gas and fuel, they can be reacted with each other on the catalyst 13 efficiently so as to generate heat. Moreover, the catalytic heater 10 is compact, which can make it portable, facilitates replacement and the like, and design freedom of an automobile can be improved.

The generated heat can be used for controlling the temperature of each portion of the automobile without consuming power of the secondary cell 6 or the like, and the travel distance can be prolonged. Moreover, the life of the secondary cell 6 can be also extended.

Moreover, not only that the temperature of each portion of the automobile can be controlled by the liquid medium 11 or the heated air but also the function of cooling/heating the cabin 3 can be provided. Moreover, by providing the thermoelectric element 26, power generation is also possible. Not only that the power of the secondary cell 6 or the like does not have to be used as before but also hot water, hot air, cool air and electricity can be obtained by the temperature control system 1 of the present invention.

### EXAMPLES

### (Example 1)

The temperature control system 1 of the present invention having the catalytic heater 10 as illustrated in Fig. 2 was prepared (the liquid sending pipe 8 was inserted into the seat 12 prepared separately as in Fig. 8), and by using such temperature control system of the present invention, an experiment was conducted in which, under an environment with an outside air temperature of 0°C, air and a fuel were made to react with each other on the catalyst 13 in the catalytic heater 10 and a part of them was circulated so as to generate heat and to heat the secondary cell 6 and the seat 12 through the liquid sending pipe 8 and the temperature-control duct 27, and a space having substantially the same size as that of the cabin was heated through the air-conditioning duct 28 for a predetermined period of time and kept at a certain temperature (20°C) (a system as in Fig. 10).

The secondary cell and the seat were heated so as to have the same temperature when the outside air temperature is 20°C.

Moreover, methanol was used as the fuel for the catalytic heater and dropped by the gravity to the filter so as to be evaporated and supplied to the catalyst. Platinum and palladium were arranged in series as the catalyst.

As a result, the secondary cell and the seat could be sufficiently heated. Moreover, a small amount of power of the secondary cell was used for rotational driving of the air-conditioning fan, the aforementioned space could be kept at a constant temperature of 20°C for 54 hours.

### (Comparative Example 1)

A temperature control system different from the temperature control system of the present invention was prepared. Specifically, unlike the catalytic heater 10 as illustrated in Fig. 2, but a catalytic heater not provided with the annular portion 19c for circulation but directly connected to the temperature-control duct on the downstream of the catalyzer so that the gas having passed through the catalyzer once is not subjected to circulative supply to the catalyzer was prepared.

The total amount of the fuel and the like were set similar to those in the Example 1, and the temperature control of the secondary cell and the seat and heating of the space having the size substantially the same as that of the cabin were performed through the liquid sending pipe, the temperature-control duct, and the air-conditioning duct.

As a result, the aforementioned space could be kept at a constant temperature of 20°C only for 32 hours. As compared with the Example 1, it took more time for heating the secondary cell or the seat, and the time for which the temperature could be kept was also short. Moreover, since the temperature of the gas could not be raised sufficiently, it was difficult to keep each portion at a temperature of 20°C or more. Furthermore, when the outside air temperature is 0°C or less, it was difficult to raise the temperature of the cabin to 20°C.

In the Example 1 in which the present invention was put into practice, by circulating the gas so that it can be supplied to the catalyzer repeatedly, waste such as unreacted air and fuel could be reduced as much as possible and the air and fuel could be reacted with each other efficiently so as to be able to generate heat sufficiently and thus, the secondary cell, the seat, and the space could be heated for time longer than the Comparative Example 1.

Moreover, as illustrated in an Example 2 below, since the gas at a higher temperature could be obtained in the catalytic heater of the temperature control system of the Example 1, temperature control of portions of the automobile and the air conditioning can be carried out more smoothly than the Comparative Example 1. Moreover, the temperatures of the inside of the cabin and the secondary cell could be raised to a higher temperature as necessary, and even when the outside temperature below 0°C or less temperature control could be sufficiently handled.

### (Example 2)

In addition to the equipment similar to that in the Example 1, the thermoelectric element 26 was further arranged.

The thermoelectric element 26 was connected to the vicinity of the catalyzer 14 and the downstream thereof in the duct 19 as illustrated in Fig. 9. Only a small amount of methanol which is the fuel was supplied, and power generation was attempted by the Seebeck effect caused by a temperature difference at the aforementioned spot while the system was operating.

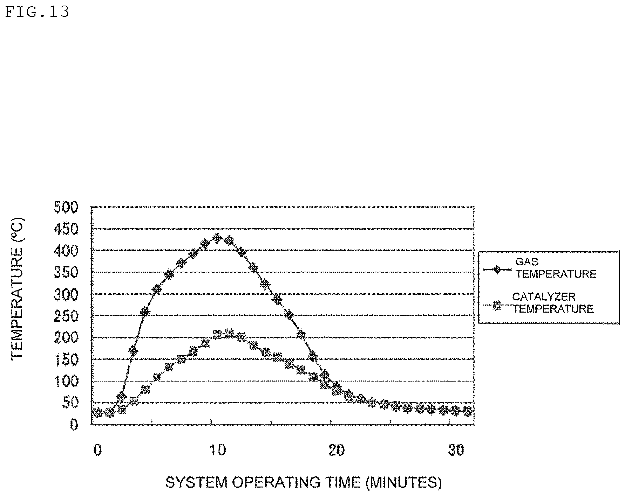

When the temperature of the vicinity of the catalyzer at this time (defined as a temperature of the catalyzer) and the temperature of the downstream region thereof (defined as a temperature of the gas after reaction) were measured, a graph in Fig. 13 was obtained.

As is known from Fig. 13, the temperature of the catalyzer itself rises to approximately 200°C. On the other hand, the gas temperature rises to approximately 430°C. By means of the temperature difference of as much as 200°C or more, the storage cell could be charged efficiently through the thermoelectric element, and the charged amount was sufficient for rotational driving of the supply fan and the like.

It was known that, by arranging the thermoelectric element as described above, power generation was possible in addition to the temperature control of portions of the automobile and air conditioning of the cabin by the present invention.

### (Comparative Example 2)

In addition to the equipment similar to that of the Comparative Example 1, the thermoelectric element was further arranged. Power generation was attempted similarly to the Example 2 other than the above.

At this time, the temperature of the catalyzer was approximately 100°C, and the temperature of the gas after reaction was approximately 130°C.

As described above, the generated heat amount was smaller than that of the Example 2. Moreover, the temperature difference was also small and not sufficient for efficient power generation with the thermoelectric element.

The present invention is not limited to the aforementioned embodiments. The embodiments are exemplification, and any of those having substantially the same configurations as the technical idea described in the claims of the present invention and exerting the similar working effects are included in the technical range of the present invention.

## Claims

1. A temperature control system incorporated in an automobile (2) provided at least with a motor chamber (4) on which a secondary cell (6) or a fuel cell for driving wheels (5) by a motor (7) is mounted and a cabin (3) into which a person gets on and controlling a temperature of a portion of the automobile, wherein
the temperature control system includes at least one catalytic heater (10) provided with a catalyst (13) and a fuel tank (15) for supplying fuel to the catalyst;
the catalytic heater generates heat when an oxidizing gas and fuel from the fuel tank are supplied to the catalyst, and
the temperature of the portion of the automobile is controlled by using heat generated by the catalytic heater, **characterized in that** at least a part of the gas supplied to the catalyst and heated by the generated heat is subjected to circulative supply to the catalyst.

2. The temperature control system according to claim 1, further comprising:
a supply fan (21) for supplying the oxidizing gas to the catalyst, and the supply fan is rotatable by using a ram pressure during running.

3. The temperature control system according to claim 1 or 2, further comprising:
a thermoelectric element (26), and the thermoelectric element generates power by using a temperature difference in the temperature control system.

4. The temperature control system according to any one of claims 1 to 3, wherein
the fuel is methanol.

5. The temperature control system according to any one of claims 1 to 4, wherein
the catalytic heater is further provided with a filter (16), and the fuel is subjected to infiltration and evaporation through the filter and supplied to the catalyst.

6. The temperature control system according to claim 5, wherein
a fuel supply pipe (17) is connected to the fuel tank, and the fuel dropped by gravity from the fuel supply pipe is supplied to the catalyst through the filter.

7. The temperature control system according to any one of claims 1 to 6, wherein
the catalyst is platinum and/or palladium.

8. The temperature control system according to any one of claims 1 to 7, wherein
the catalytic heater is provided with a plurality of the same or different types of catalysts as the catalyst;
the plurality of catalysts are arranged in series so that the oxidizing gas and the fuel can be sequentially supplied to the plurality of catalysts; or
the plurality of catalysts are arranged in parallel and the oxidizing gas and the fuel can be selectively and separately supplied to the plurality of catalysts.

9. The temperature control system according to any one of claims 1 to 8, further comprising:
a liquid medium, and the liquid medium is heated by using heat generated by the catalytic heater and is circulated to the portion of the automobile.

10. The temperature control system according to claim 9, further comprising:
a heat exchanger (24) for transmitting heat generated by the catalytic heater to the liquid medium.

11. The temperature control system according to any one of claims 1 to 10, wherein
a gas which is supplied to the catalyst, is heated by the generated heat and is not subjected to circulative supply to the catalyst is circulated to the portion of the automobile.

12. The temperature control system according to any one of claims 1 to 11, wherein
the temperature control system is provided with a function of cooling the inside of the cabin, and the air inside the cabin is cooled by a heat pump method by using heat generated by the catalytic heater.

13. The temperature control system according to any one of claims 1 to 12, wherein
the temperature control system is provided with a function of heating the inside of the cabin, and the air inside the cabin is heated by using heat generated by the catalytic heater.

## Patentansprüche

1. Temperatursteuersystem, das in ein Automobil (2) eingebaut ist, das mindestens mit einer Motorkammer (4) versehen ist, auf der eine Sekundärzelle (6) oder eine Brennstoffzelle zum Antreiben von Rädern (5) durch einen Motor (7) und eine Kabine (3) montiert ist, in die eine Person einsteigt, das eine Temperatur eines Abschnitts des Automobils steuert, wobei das Temperatursteuersystem mindestens eine katalytische Heizung (10) umfasst, die mit einem Katalysator (13) und einem Kraftstofftank (15) zur Lieferung von Kraftstoff an den Katalysator versehen ist;
wobei die katalytische Heizung Wärme erzeugt, wenn dem Katalysator ein oxidierendes Gas und Kraftstoff aus dem Kraftstofftank zugeführt werden, und die Temperatur des Abschnitts des Automobils unter Verwendung der von der katalytischen Heizung erzeugten Wärme gesteuert wird, **dadurch gekennzeichnet, dass** mindestens ein Teil des Gases, das dem Katalysator zugeführt und durch die erzeugte Wärme erwärmt wird, dem Katalysator zirkulierend zugeführt wird.

2. Temperatursteuersystem nach Anspruch 1, ferner umfassend:
einen Zuluftventilator (21) zum Zuführen des Oxidationsgases zum Katalysator, wobei der Zuluftventilator drehbar ist, indem während des Betriebs ein Staudruck verwendet wird.

3. Temperatursteuersystem nach Anspruch 1 oder 2, ferner umfassend:
ein thermoelektrisches Element (26), wobei das thermoelektrische Element Strom unter Verwendung einer Temperaturdifferenz im Temperatursteuersystem erzeugt.

4. Temperatursteuersystem nach einem der Ansprüche 1 bis 3, wobei der Kraftstoff Methanol ist.

5. Temperatursteuersystem nach einem der Ansprüche 1 bis 4, wobei die katalytische Heizung ferner mit einem Filter (16) versehen ist und der Brennstoff einer Infiltration und Verdampfung durch den Filter unterzogen und dem Katalysator zugeführt wird.

6. Temperatursteuersystem nach Anspruch 5, wobei eine Kraftstoffzufuhrleitung (17) mit dem Kraftstofftank verbunden ist und der durch die Schwerkraft von der Kraftstoffzufuhrleitung abfallende Kraftstoff dem Katalysator durch den Filter zugeführt wird.

7. Temperatursteuersystem nach einem der Ansprüche 1 bis 6, wobei der Katalysator Platin und/oder Palladium ist.

8. Temperatursteuersystem nach einem der Ansprüche 1 bis 7, wobei die katalytische Heizung mit einer Mehrzahl gleicher oder verschiedener Arten von Katalysatoren wie der Katalysator versehen ist;
die Mehrzahl von Katalysatoren in Reihe angeordnet sind, so dass das oxidierende Gas und der Kraftstoff nacheinander der Mehrzahl von Katalysatoren zugeführt werden können; oder
die Mehrzahl von Katalysatoren parallel angeordnet sind und das oxidierende Gas und der Kraftstoff selektiv und getrennt der Mehrzahl der Katalysatoren zugeführt werden können.

9. Temperatursteuersystem nach einem der Ansprüche 1 bis 8, ferner umfassend:
ein flüssiges Medium, wobei das flüssige Medium unter Verwendung von Wärme erwärmt wird, die von der katalytischen Heizung erzeugt wird, und zu dem Abschnitt des Automobils zirkuliert wird.

10. Temperatursteuersystem nach Anspruch 9, ferner umfassend:
einen Wärmetauscher (24) zum Übertragen von Wärme, die von der katalytischen Heizung erzeugt wird, auf das flüssige Medium.

11. Temperatursteuersystem nach einem der Ansprüche 1 bis 10, wobei ein Gas, das dem Katalysator zugeführt wird, durch die erzeugte Wärme erwärmt wird und keiner zirkulierenden Zufuhr zum Katalysator unterworfen ist, zum Abschnitt des Automobils zirkuliert wird.

12. Temperatursteuersystem nach einem der Ansprüche 1 bis 11, wobei das Temperatursteuersystem mit einer Funktion zum Kühlen des Inneren der Kabine versehen ist und die Luft im Inneren der Kabine durch ein Wärmepumpenverfahren unter Verwendung von Wärme gekühlt wird, die von der katalytischen Heizung erzeugt wird.

13. Temperatursteuersystem nach einem der Ansprüche 1 bis 12, wobei das Temperatursteuersystem mit einer Funktion zum Erwärmen des Inneren der Kabine versehen ist und die Luft im Inneren der Kabine unter Verwendung von Wärme erwärmt wird, die von der katalytischen Heizung erzeugt wird.

## Revendications

1. Système de commande de température incorporé dans une automobile (2) prévue avec au moins une chambre (4) de moteur sur laquelle une batterie secondaire (6) ou une pile à combustible pour entraîner des roues (5) par un moteur (7) est montée et un habitacle (3) dans lequel une personne s'installe et commandant une température d'une partie de l'automobile, dans lequel
le système de commande de température inclut au moins un appareil de chauffage à catalyse (10) prévu avec un catalyseur (13) et un réservoir de carburant (15) pour alimenter du carburant jusqu'au catalyseur ;
l'appareil de chauffage à catalyse génère de la chaleur lorsqu'un gaz oxydant et du carburant provenant du réservoir de carburant sont alimentés jusqu'au catalyseur, et
la température de la partie de l'automobile est commandée en utilisant la chaleur générée par l'appareil de chauffage à catalyse, **caractérisé en ce qu'**au moins une partie du gaz alimenté jusqu'au catalyseur et chauffé par la chaleur générée est soumise à une alimentation en circulation jusqu'au catalyseur.

2. Système de commande de température selon la revendication 1, comprenant en outre :
un ventilateur d'alimentation (21) pour alimenter le gaz oxydant jusqu'au catalyseur, et le ventilateur d'alimentation est rotatif en utilisant une pression dynamique lors du fonctionnement.

3. Système de commande de température selon la revendication 1 ou 2, comprenant en outre :
un élément thermoélectrique (26), et l'élément thermoélectrique génère de l'énergie en utilisant une différence de température dans le système de commande de température.

4. Système de commande de température selon l'une quelconque des revendications 1 à 3, dans lequel
le carburant est du méthanol.

5. Système de commande de température selon l'une quelconque des revendications 1 à 4, dans lequel
l'appareil de chauffage à catalyse est en outre prévu avec un filtre (16), et le carburant est soumis à infiltration et évaporation à travers le filtre et alimenté jusqu'au catalyseur.

6. Système de commande de température selon la revendication 5, dans lequel
un tuyau d'alimentation de carburant (17) est connecté au réservoir de carburant, et le carburant descendant par gravité depuis le tuyau d'alimentation de carburant est alimenté jusqu'au catalyseur à travers le filtre.

7. Système de commande de température selon l'une quelconque des revendications 1 à 6, dans lequel
le catalyseur est du platine et/ou du palladium.

8. Système de commande de température selon l'une quelconque des revendications 1 à 7, dans lequel
l'appareil de chauffage à catalyse est prévu avec une pluralité de types semblables ou différents de catalyseurs comme le catalyseur ;
la pluralité de catalyseurs sont agencés en série de manière à ce que le gaz oxydant et le carburant puissent être alimentés séquentiellement jusqu'à la pluralité de catalyseurs ; ou
la pluralité de catalyseurs sont agencés en parallèle et le gaz oxydant et le carburant peuvent être alimentés sélectivement et séparément jusqu'à la pluralité de catalyseurs.

9. Système de commande de température selon l'une quelconque des revendications 1 à 8, comprenant en outre :
un milieu liquide, et le milieu liquide est chauffé en utilisant de la chaleur générée par l'appareil de chauffage à catalyse et est mis en circulation jusqu'à la partie de l'automobile.

10. Système de commande de température selon la revendication 9, comprenant en outre :
un échangeur de chaleur (24) pour transmettre la chaleur générée par l'appareil de chauffage à catalyse jusqu'au milieu liquide.

11. Système de commande de température selon l'une quelconque des revendications 1 à 10, dans lequel
un gaz qui est alimenté jusqu'au catalyseur, est chauffé par la chaleur générée et n'est pas soumis à alimentation en circulation jusqu'au catalyseur est mis en circulation jusqu'à la partie de l'automobile.

12. Système de commande de température selon l'une quelconque des revendications 1 à 11, dans lequel
le système de commande de température est prévu avec une fonction de refroidissement de l'intérieur de l'habitacle, et l'air à l'intérieur de l'habitacle est refroidi par un procédé de pompe à chaleur en utilisant la chaleur générée par l'appareil de chauffage à catalyse.

13. Système de commande de température selon l'une quelconque des revendications 1 à 12, dans lequel
le système de commande de température est prévu avec une fonction de chauffage de l'intérieur de l'habitacle, et l'air à l'intérieur de l'habitacle est chauffé en utilisant la chaleur générée par l'appareil de chauffage à catalyse.
